# EUROPEAN PATENT APPLICATION

(11) **EP 3 789 301 A1**
(43) Date of publication of application: **10.03.2021**
(21) Application number: 19382750.8
(22) Date of filing: 03.09.2019
(51) Int. Cl.: B64D 15/02, B64D 27/24, B64D 29/00

(54) **COOLING SYSTEM FOR AN ELECTRIC PROPULSION UNIT OF AN AIRCRAFT**

(71) Applicant: Airbus Operations, S.L.U., 28906 Getafe (Madrid) (ES)
(72) Inventor: ANDRÉS GONZALEZ, Carlos, 28906 Getafe, Madrid (ES); MÉNDEZ DÍAZ, Antón, 28906 Getafe, Madrid (ES)
(74) Representative: ABG Intellectual Property Law, S.L.

(57) **Abstract**

Cooling system for an electric propulsion unit of an aircraft, the electric propulsion unit comprising an electric motor, surrounded by a nacelle with an air inlet and an air outlet, wherein the cooling system comprises: a cooling circuit for cooling the electric motor by means of the circulation of a first fluid, a heating circuit for heating one or more parts of the nacelle by means of the circulation of a second fluid configured to transfer heat to the one or more parts of the nacelle, such that the formation of ice is prevented on the one or more parts of the nacelle, a heat exchanger in fluid communication with the cooling circuit, and in fluid communication with the heating circuit, the heat exchanger being configured to transfer heat from the cooling circuit to the heating circuit, and a nacelle heating loop configured as a conduct.

## Description

### TECHNICAL FIELD OF THE INVENTION

The present invention belongs to the field of aircraft propulsion units and, more particularly, to the field of cooling systems for electric propulsion units.

### BACKGROUND OF THE INVENTION

Currently most aircraft propulsion systems such as turboprops or turbofans comprise combustion engines. These engines have high temperature heat sources which need to be cooled to ensure the operation and safety of the aircraft. For small engines, a freestream or ducted airflow is enough to dissipate the heat of the combustion. For large engines however, more sophisticated systems are required.

Part of the heat dissipated by the engine can be used for heating purposes, for example, preventing the ice formation on certain parts of the aircraft. In particular, the formation of ice on the inlets of the nacelles of the engines or the leading edges of the wings can critically affect the safety of the aircraft, and to that end a number of anti-ice or ice protection systems are known.

Some of these solutions require the channeling of a high pressure, hot air bleed from an intermediate stage of the engine to the cold surfaces of the aircraft. In a known solution the channeling is achieved by means of a pressure resistant conduct arranged along the leading edge of the wing or with an annular or toroid configuration for the inlet of the nacelle. These conducts must have a minimum thickness to resist the high pressures of the air bleed and thus are usually heavy.

At present, there is a trend toward the reduction of carbon dioxide emissions and other detrimental emissions. Accordingly, several alternative propulsion systems which do not entail the use of combustion engines are being developed, such as electric driven propulsion units.

Aircraft propelled by electric propulsion units still face the problem of ice formation, however the electric propulsion units do not have such a high temperature heat source and amount of available waste heat compared to thermal engines, and therefore it is not possible to solve the problem of ice formation with the help of the above mentioned system.

Alternative solutions are known, such as the use of electric resistors on or near the surfaces which need ice protection. Whilst resistor-based ice protection systems are simple and reliable, they tend to be heavy and use a large amount of energy, which may severely penalize the range and payload of the aircraft.

### SUMMARY OF THE INVENTION

The present invention provides a solution for the aforementioned problems, by a cooling system according to claim 1, an electric propulsion unit according to claim 9, and an aircraft according to claim 10. In dependent claims, preferred embodiments of the invention are defined.

In a first inventive aspect, the invention provides a cooling system for an electric propulsion unit of an aircraft, the electric propulsion unit comprising an electric motor, surrounded by a nacelle with an air inlet and an air outlet, wherein the cooling system comprises:
a cooling circuit for cooling the electric motor by means of the circulation of a first fluid,
a heating circuit for heating one or more parts of the nacelle by means of the circulation of a second fluid configured to transfer heat to the one or more parts of the nacelle, such that the formation of ice is prevented on the one or more parts of the nacelle,
a heat exchanger in fluid communication with the cooling circuit, and in fluid communication with the heating circuit, the heat exchanger being configured to transfer heat from the cooling circuit to the heating circuit, and
a nacelle heating loop, configured as a conduct, wherein the nacelle heating loop is configured to be arranged inside of the inlet of the nacelle and extending around the inlet of the nacelle, and wherein the nacelle heating loop is in fluid communication with the heating circuit.

The cooling system of the present invention, not only removes the excess heat of the propulsion unit, it transfers the heat to a second fluid which is in communication with the inlet of the nacelle. Since the second fluid does not come from the compressor stage of a turbofan or turboprop, it is at low pressures and it does not require a thick nacelle heating loop conduct, thus saving dead weight in the aircraft. Thus, a single cooling system is capable of cooling an electric propulsion unit and avoid the formation of ice on a nacelle inlet.

Even though electric propulsion units do not rely on fuel combustion to produce thrust, and thus they lack a high temperature heat source, the electric elements of the propulsion units still need to dissipate the heat produced by Joule heating to ensure the correct operation of the elements which drive or control the propulsion unit.

Additionally, the low temperature conditions present in the nacelle surface can be used for cooling purposes in the electric propulsion unit. During flight, the harsh environment conditions, particularly very low temperatures, give rise to the formation of ice on the exposed portions of an aircraft. The formation and accretion of ice on the leading edge of airfoils and in particular on the inlet surfaces of an engine may lead to the ingestion of large ice fragments and the damage of the engine. The present invention avoids the formation of ice by means of a heating circuit in thermal contact with the most critical areas of the electric propulsion unit.

Throughout all this document, electric propulsion unit should be understood as the main driving device of an aircraft, comprising at least one electric engine or motor, preferably driving a propeller, fan or turbine ducted in a nacelle. This motor can be of any kind, and can be fed by means of direct or alternating current.

Aircraft should be understood as a conventional air vehicle comprising all the necessary elements for its operation, such as a power source, a propulsion unit, control surfaces, airfoils, etc. This aircraft can be manned by pilots or remotely controlled from a stationary position.

The first cooling circuit is meant to evacuate the excess heat produced in the motor during operation; this heat is produced mainly by effect of Joule heating (also known as ohmnic heating), or by friction of the moving parts of the propulsion unit. The first cooling circuit of the invention creates a closed path flow of a first fluid from the motor (which operates as the heat source), to a heat exchanger (which operates as the heat sink). A common device, such as a pump or a fan moves the fluid in the circuit.

The heat is then transferred from the first fluid to the second fluid by means of a heat exchanger, which can be of any suitable type known by the skilled person.

The second fluid is transported in a closed path from the heat exchanger (which here operates as the heat source) to the nacelle heating loop. This heating loop is configured as a circuit with an inlet for the second fluid and an outlet for the second fluid. Accordingly, the hot second fluid is introduced in the nacelle heating loop inlet port; there, the second fluid moves along the loop in thermal contact with the cold areas of the nacelle, and transfers its heat to those areas. Finally the second fluid exits the nacelle heating loop through the outlet port and returns to the heating circuit, and from there to the heat exchanger.

Thus the heat is generated in the propulsion unit and is carried over the cooling circuit, the heat exchanger, the heating circuit and the nacelle heating loop to those portions, parts or surfaces of the nacelle which are prone to the formation of ice, such as the inlet of the nacelle.

Two main effects are achieved with the present invention: the electrical propulsion unit is continuously cooled, and the critical areas of the nacelle are heated with an internal source of heat, such that the formation and accretion of ice is prevented.

Besides, the present invention provides for a lightweight combined cooling and heating system, without the use of separate conducts and power sources, thus avoiding dead weight. Since the second fluid does not need to be at high pressure, as commonly happens with the bleed air systems extracting air from an intermediate stage of a turbofan, the nacelle heating loop heating the nacelle inlet portion does not need to be pressurized and therefore the walls of the conduct can be thinner and lighter.

In a particular embodiment, the cooling system further comprises a bypass valve, wherein the bypass valve selectively allows the fluid communication between the cooling circuit and the heating circuit, such that the nacelle heating loop can be in fluid communication with the cooling circuit of the electric motor.

With a bypass valve, a direct fluid communication between the heating circuit and the cooling circuit can be stablished selectively. This bypass valve allows for a partial opening in such a way that the temperature at the electric motor and at the nacelle heating loop can be controlled accurately and also contributes to control the pressure levels of the circuit fluids.

In a particular embodiment, the cooling system further comprises a fluid circulation device for the movement of the first fluid or the second fluid, or both.

A fluid circulation device moves the first or the second fluid along its respective circuits, while the heat is transferred to or from the fluids. In one embodiment, the fluid circulation device is a pump; while in other embodiments is a fan. Also the fluid circulation device can be controlled by means of a control signal or a control loop.

In a more particular embodiment, the fluid circulation device is arranged in the heating circuit.

Advantageously, the arrangement of the fluid circulation device in the heating circuit allows for the use of a common circulation device for both circuits, when the bypass valve is opened.

In a particular embodiment, the cooling system further comprises at least two temperature sensors arranged in thermal contact with a fluid inlet of the heating loop and a fluid outlet of the heating loop, respectively and configured to generate a signal related to the temperature difference between the fluid inlet and fluid outlet of the heating loop.

Advantageously, a set of two separate temperature sensors measuring the temperature difference between the inlet and the outlet of the nacelle heating loop enables the generation of a signal of the efficiency and effectiveness of the heating circuit, and thus enables for the implementation of a control system. In an embodiment, these temperature sensors are resistance thermometers such as PRT's (Platinum Resistance Thermometer), which are widely used in aeronautics.

In a particular embodiment, the cooling system further comprises a signal processor operatively connected to the temperature sensors and configured to produce a signal related to the performance of the cooling system based on the temperature difference signal.

With the use of a signal processor connected to the two or more temperature sensors it is possible to evaluate the efficiency and effectiveness of the system, and generate a control signal or display the information to an operator.

In a more specific embodiment the signal processor is operatively connected to and configured to control at least the fluid circulation device and the bypass valve, generating a control loop. This control loop can improve the thermal performance of the cooling and heating circuits allowing for a reduction of the specific fuel/energy consumption, as well as allowing for a reduction of the heat exchanger size.

Advantageously, this embodiment allows for the control of the main operation parameters of the cooling system, namely the ratio of bypass valve opening and the velocity of the flow, such that the cooling and heating processes can be effectively controlled either automatically or manually by an operator.

In a particular embodiment, the cooling system further comprises a motor temperature sensor arranged in thermal contact with the electric motor.

The addition of a temperature sensor monitoring the temperature of the electric motor allows for an increased safety against the overheating of the propulsion unit or units, as well as a signal which can be fed to the signal processor, such that the temperature at the electric motor can be accurately regulated.

In a second inventive aspect, the invention provides an electric propulsion unit of an aircraft, comprising an electric motor, a nacelle surrounding the electric motor, and a cooling system according to the first inventive aspect. In a preferred embodiment the nacelle heating loop of the cooling system is arranged inside of the inlet of the nacelle and extending around the inlet of the nacelle.

In a third inventive aspect, the invention provides an aircraft comprising an electric propulsion unit according to the second inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic view of a propulsion unit with a cooling system according to the invention.
- Figure 2: This figure shows a schematic view of a propulsion unit with an alternative embodiment of the cooling system according to the invention.
- Figure 3: This figure shows an aircraft with a cooling system according to the invention.

### DETAILED DESCRIPTION OF THE INVENTION

In a preferred embodiment, the present invention is applied to an electric-powered fixed wing aircraft (30) with propulsion units (20) of the ducted fan type and connected to the aircraft (30) by means of a nacelle (12). In some embodiments the aircraft (30) comprises two nacelles (12) under its wings, each nacelle (12) housing a propulsion unit (20). In other embodiments, the nacelle or nacelles (12) are connected to the main body of the aircraft (30).

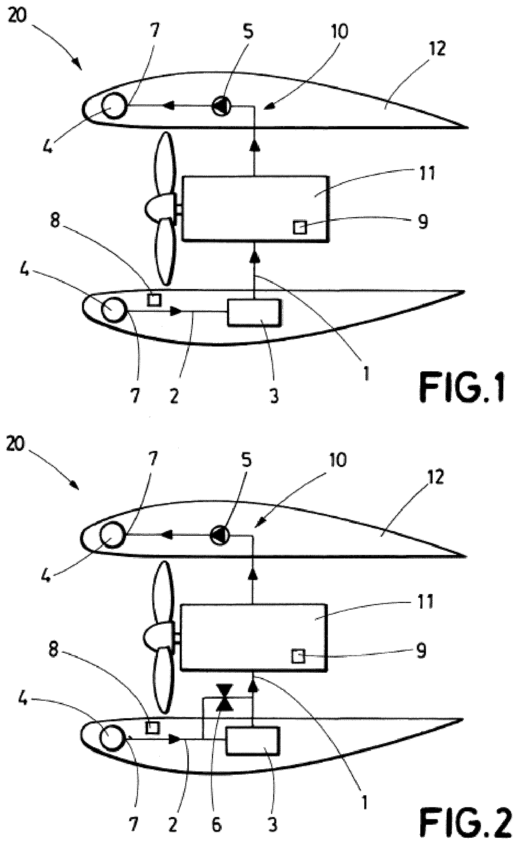

Figure 1 shows a preferred embodiment of the cooling system (10), arranged in an electric propulsion unit (20) of an aircraft (30). In this schematic view, the electric propulsion unit (20) is depicted with a propeller connected to an electric motor (11) surrounded by a nacelle (12). According to this view, the air flows from left to right, thus the inlet portion of the nacelle (12) corresponds to the left portion of the nacelle (12). This inlet portion is the part which is most exposed to the formation and accretion of ice, and accordingly, in this embodiment, the nacelle heating loop (4) is located at the inlet portion with a circumferential configuration arranged substantially coaxial to the nacelle (12) and inside of the inlet portion of said nacelle (12).

The cooling circuit (1) removes the excess heat from the electric motor (11); this is achieved in one embodiment by heat convection, forcing the flow of the first fluid over the hot external surfaces of the electric motor (11). As any other conventional fluid circuit in an aircraft, the cooling circuit (1) comprises several conducts and connections, preferably made of a lightweight and resistant to corrosion material, such as a polymer or a light alloy. As first fluid, in an embodiment it can be used a liquid or in other embodiments, a gas; in a particular case it can be used a phase changing fluid. As the first fluid it can favorably be used lubricating oil of the electric motor (11), in that case, to the already mentioned advantages, can be added the improved lubrication and saving the additional weight of a separate circuit.

The first fluid then flows to the heat exchanger (3), and then delivers the heat to the second fluid, which is at the same time flowing through the heating circuit (2). The heat exchanger (3) can be of any type, but in a preferred embodiment is a lightweight heat exchanger. A performance analysis may be done in order to select the best heat exchanger type and materials for each specific embodiment. The performance analysis preferably considers the sizing cases and maximum and minimum temperature conditions for the fluids in order to manufacture a heat exchanger as small and light as possible.

As the cooling circuit (1), the heating circuit (2) comprises a plurality of conducts and other elements, of common application in the field. Additionally, the heating circuit (2) comprises a fluid circulation device (5), which in a preferred embodiment is a conventional pump; nevertheless the fluid circulation device (5) is adapted to the characteristics of the second fluid. In some embodiments, the second fluid is a gas, and therefore, the fluid circulation device (5) is a fan type device. It must be said that the purpose of the fluid circulation device (5) is forcing the circulation of the second fluid along the heating circuit (2) and into the nacelle heating loop (4), not substantially increasing the pressure of the second fluid.

To establish the communication of the heating circuit (2) with the nacelle heating loop (4), the nacelle heating loop (4) comprises a set of inlet and outlet ports. An example of these ports is a set of simple openings in the conduct of the nacelle heating loop (4); in a further development, the inlet and outlet ports comprise check or non-return valves which prevent the undesired flow of the cold second fluid through the inlet port. Vanes, flaps or additional valves can be positioned in the heating loop (4) to guide the flow in the intended direction.

Owing to the position of the nacelle heating loop (4) inside the inlet portion of the nacelle (12) and the rest of elements, the second fluid circumferentially travels along the loop (4) while transferring the heat to the walls of the heating loop (4), which in turn transfers the heat by conduction to the neighboring inlet portion of the nacelle (12), in particular the heat is transferred to the external surface of the inlet, which is the most exposed part.

Finally, the cold second fluid leaves the nacelle heating loop (4) and moves through the heating circuit (2) reaching the heat exchanger (3), where is heated again by the first fluid and starts again the circuit.

Figure 2 shows an embodiment of the invention, which comprises a bypass valve (6) arranged in the heating circuit (2); this bypass valve (6) or regulation valve allows for a selective communication between the heating circuit (2) and the cooling circuit (1), bypassing the heat exchanger (3), and helps to control the temperature of the electric motor (11) and the nacelle deicing arrangement. For this embodiment, both first and second fluids must be the same fluid, or at least be in the same phase. Also the bypass valve (6) can be partially open (or closed), such that the temperature control can be gradual.

In a further improvement, the system (10) comprises a set of temperature sensors (7) placed in thermal contact with different parts of the cooling system (10); in a preferred embodiment, there are at least two separate temperature sensors (7) at the inlet and outlet ports of the nacelle heating loop (4). The temperature sensors (7) generate a signal, preferably an electrical signal, of the temperature at both ports, such that it can be fed to a signal processor (8), for example a computer, and compared to obtain data of the effectiveness and efficiency of the cooling system (10).

Another embodiment provides for an additional control action by means of a bypass valve (6) actuator, which enables an automated operation of the valve (6), either by direct command of a human operator or as a result of a control signal generated by the signal processor (8) upon processing the input temperature signals. Also, an additional motor temperature sensor (9) may be placed in thermal contact with a critical part of the electric motor (11) and operatively connected to the signal processor (8), such that, when the temperature of the electric motor (11) exceeds a threshold temperature, the signal processor (8) triggers an alarm signal or a control action, for example a bypass valve (6) actuator control signal, thus enabling the opening or closing of the bypass valve (6).

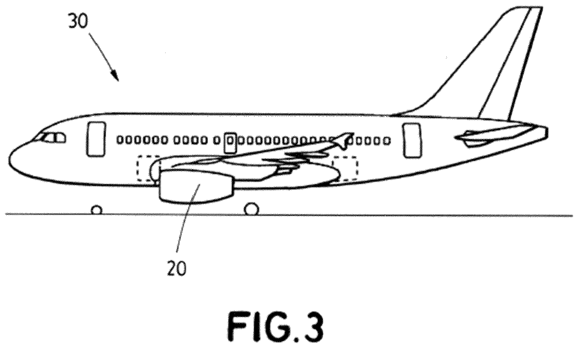

Figure 3 shows an aircraft (30) comprising a cooling system (10) as described above.

## Claims

1. Cooling system (10) for an electric propulsion unit (20) of an aircraft (30), the electric propulsion unit (20) comprising an electric motor (11), surrounded by a nacelle (12) with an air inlet and an air outlet,
wherein the cooling system (10) comprises:
a cooling circuit (1) for cooling the electric motor (11) by means of the circulation of a first fluid,
a heating circuit (2) for heating one or more parts of the nacelle (12) by means of the circulation of a second fluid configured to transfer heat to the one or more parts of the nacelle (12), such that the formation of ice is prevented on the one or more parts of the nacelle (12),
a heat exchanger (3) in fluid communication with the cooling circuit (1), and in fluid communication with the heating circuit (2), the heat exchanger (3) being configured to transfer heat from the cooling circuit (1) to the heating circuit (2), and
a nacelle heating loop (4), configured as a conduct, wherein the nacelle heating loop (4) is configured to be arranged inside of the inlet of the nacelle (12) and extending around the inlet of the nacelle (12), and wherein the nacelle heating loop (4) is in fluid communication with the heating circuit (2).

2. Cooling system (10) according to claim 1, further comprising a bypass valve (6), wherein the bypass valve (6) selectively allows the fluid communication between the cooling circuit (1) and the heating circuit (2), such that the nacelle heating loop (4) can be in fluid communication with the cooling circuit (1) of the electric motor (11).

3. Cooling system (10) according to any of claims 1 or 2, further comprising a fluid circulation device (5) for the movement of the first fluid or the second fluid, or both.

4. Cooling system (10) according to claim 3, wherein the fluid circulation device (5) is arranged in the heating circuit (2).

5. Cooling system (10) according to any of claims 1 to 4, further comprising at least two temperature sensors (7) arranged in thermal contact with a fluid inlet of the heating loop (4) and a fluid outlet of the heating loop (4), respectively and configured to generate a signal related to the temperature difference between the fluid inlet and fluid outlet of the heating loop (4).

6. Cooling system (10) according to claim 5, further comprising a signal processor (8) operatively connected to the temperature sensors (7) and configured to produce a signal related to the performance of the cooling system (10) based on the temperature difference signal.

7. Cooling system (10) according to claim 6, when claim 6 depends on claims 2 and 3, wherein the signal processor (8) is operatively connected to and configured to control at least the fluid circulation device (5) and the bypass valve (6).

8. Cooling system (10) according to any of claims 1 to 7, further comprising a motor temperature sensor (9) arranged in thermal contact with the electric motor (11).

9. Electric propulsion unit (20) of an aircraft (30), comprising an electric motor (11), a nacelle (12) surrounding the electric motor (11), and a cooling system (10) according to any of the previous claims.

10. Aircraft (30) comprising an electric propulsion unit (20) according to the previous claim.
